# EUROPÄISCHE PATENTSCHRIFT

(11) **EP 2 933 141 B1**
(45) Veröffentlichungstag und Bekanntmachung des Hinweises auf die Patenterteilung: **14.08.2019**
(21) Anmeldenummer: 15162698.3
(22) Anmeldetag: 08.04.2015
(51) Int. Cl.: B60P 7/08

(54) **SICHERUNGSSCHIENE ZUM EINBAU IN FAHRZEUGE**
SECURING RAIL FOR MOUNTING IN VEHICLES
RAILS DE SÉCURITÉ À INSTALLER DANS DES VÉHICULES

(30) Priorität: 16.04.2014 DE 102014105441
(43) Veröffentlichungstag der Anmeldung: 21.10.2015
(73) Patentinhaber: TS Gesellschaft für Transport- und Sicherungssysteme mbH, 58285 Gevelsberg (DE)
(72) Erfinder: Dönnebrink, Andreas, 59348 Lüdinghausen (DE); Agarius, Klaus, 58285 Gevelsberg (DE)
(74) Vertreter: Buse, Mentzel, Ludewig Patentanwaltskanzlei

(56) Entgegenhaltungen:
- DE-A1- 10 259 388
- DE-A1-102005 035 319
- DE-U1- 20 218 399
- DE-U1-202009 007 027

## Beschreibung

Die Erfindung betrifft eine Sicherungsschiene der im Oberbegriff des Anspruchs 1 angegeben Art. Derartige Schienen finden vielfach im Bereich der Ladungssicherung Verwendung. Sie werden zumeist an Fußböden, Decken oder Seitenwänden von Transportern, LKWs, Anhängern oder anderen Fahrzeugen angeordnet. In die Ausnehmungen solcher Schienen können dann, unter Zwischenschaltung der Hinterschnitte, Fittings eingebracht werden, an denen wiederum Sicherungsnetze, Zurrgurte und andere Ladungssicherungsmittel befestigt werden können. Eine gattungsgemäße Sicherungsschiene ist in DE 10 2005 035319 A1 offenbart.

Bekannte Sicherungsschienen bestehen häufig aus AluminiumStrangpressprofilen, welche in den Laderäumen festgeschraubt werden. Das Festschrauben erfolgt üblicherweise durch Bohrungen im Boden der Sicherungsschiene. Nachteilig daran ist jedoch, dass, je nach Durchführung der Befestigung, sich die Schiene verbiegen kann, insbesondere, wenn eine erste Schraube durch ein erstes Loch sehr fest angezogen wird, wenn das Material am Boden oft nicht so massiv ausgeführt ist. Daher muss das Material am Boden einer solchen Sicherungsschiene häufig mit einer relativ dicken Wandstärke ausgeführt sein. Des Weiteren ist die Herstellung derartiger Sicherungsschienen oft sehr teuer, da die Aluminium-Strangpressprofile noch einer spanenden Bearbeitung unterzogen werden müssen, um die Ausnehmungen herzustellen, bevor sie zum Einbau in einem Fahrzeug bereit sind. Diese spanende Bearbeitung macht einen Großteil der Kosten für die Herstellung von Sicherungsschienen aus.

Neben den Aluminiumstrangpressprofilen gibt es auch Sicherheitsschienen aus Stahl, die überwiegend durch Schweißen befestigt werden, was entsprechend aufwendig ist. Bei diesen meist C-förmigen Schienen kann auch eine Befestigung durch Schrauben erfolgen, die dann als Senkschrauben ausgebildet sind. Dies bedeutet jedoch, dass die entsprechenden Schienen mit Senklöchern versehen werden müssen, welches ebenfalls wieder eine spannende Bearbeitung bedeutet mit den entsprechenden, damit verbundenen Kosten.

Aufgabe der Erfindung ist es daher, die vorgenannten Nachteile zu vermeiden und eine Sicherungsschiene zu schaffen, die kostengünstig in der Herstellung ist und sicher ohne eine Schweißverbindung befestigt werden kann. Diese Aufgabe wird durch die kennzeichnenden Merkmale von Anspruch 1 gelöst, denen folgende besondere Bedeutung zukommt.

Das Profil der Sicherungsschiene ist aus einem umgeformten Blech hergestellt. Ein solches Profil wird im Weiteren Umformprofil genannt und das zugehörige Herstellungsverfahren Umformverfahren oder Umformprozess.

Das Profil weist dabei wenigstens einen Mittelbereich und zwei seitlich davon angeordnete Schenkel auf. Diese Form ist besonders biegesteif. Erfindungsgemäß ist der Mittelbereich symmetrisch zur Längsachse der Sicherungsschiene ausgebildet. Die beiden Schenkel können ebenfalls symmetrisch zueinander angeordnet sein oder auch asymmetrisch.

Derartige umgeformte Bleche lassen sich durch Abkanten oder Pressen oder auch durch ein herkömmliches Rollformverfahren herstellen. Diese Herstellverfahren sind dabei bereits seit Langem bekannt und die so hergestellten Profile sind kostengünstig. Die für die Anordnung von Ausnehmungen benötigten Öffnungen in der Sicherungsschiene werden während oder kurz vor dem Umformprozess durch Stanzen eingebracht.

Dies ist deutlich kostengünstiger in der Herstellung als eine spanende Bearbeitung, wie es bei bisher bekannten Sicherungsschienen der Fall ist. Darüber hinaus wir für die Herstellung von Umformprofilen weniger Material verwendet, als für die Herstellung bekannter Profile aus Aluminium oder Stahl, was aufgrund der steigenden Rohstoffpreise ebenfalls günstiger ist.

In einem bevorzugten Ausführungsbeispiel ist es vorgesehen, den Mittelbereich durch ein klebendes Material an einer Fläche in einem Fahrzeug zu befestigen. Hierzu ist der unterste Bereich des Mittelbereiches ein wenig höher liegend ausgebildet als der unterste Bereich der Schenkel, welche auf der Fläche aufliegen, so dass zwischen diesen beiden Bereichen ein Spalt besteht. In diesen Spalt kann dann klebendes Material eingebracht werden, um die Sicherungsschiene an einer Fläche zu fixieren. Ein solcher Spalt kann beispielsweise eine Höhe von 0,3 mm aufweisen. Andere Maße sind hier selbstverständlich denkbar.

Besonders bevorzugt weist bei dieser Ausführungsform der Mittelbereich nach oben hin abgeknickte Flanken auf, in welche klebendes Material eingebracht werden kann. Insbesondere, wenn eine mit der Montage der Sicherungsschiene beauftragte Person etwas zu viel klebendes Material im Mittelbereich aufbringt, kann das klebende Material dann in diese abgeknickten Flankenbereiche ausweichen, ohne den optischen Gesamteindruck der eingeklebten Sicherungsscheine zu stören oder die Sicherungsschiene mit klebendem Material zu verschmutzen. Generell können als klebendes Material Ein-Komponenten- oder Zwei-Komponenten-Kleber dienen.

Eine erste Ausführungsform sieht ebenfalls vor, dass im Profilquerschnitt der Sicherungsschiene betrachtet die Schenkel vom Mittelbereich aus gesehen erst nach oben geführt werden und dann nach außen weggeklappt sind, wobei sie einen ersten oberen Flügel bilden. Danach werden die Schenkel nach unten geführt und im unteren Bereich wieder nach innen umgeschlagen, um dort einen zweiten Flügel, nämlich einen Innenflügel, zu bilden. Diese Art der Schiene ist sehr stabil und verfügt über eine hohe Biegesteifigkeit.

In einer zweiten Ausführungsform sind, im Profilquerschnitt der Sicherungsschiene betrachtet, die Schenkel vom Mittelbereich aus gesehen nach oben geführt und dann nach außen weggeklappt und bilden somit wieder einen ersten oberen Flügel. Danach sind die Schenkel nach unten geführt und im unteren Bereich weiter nach außen geklappt, um dort einen zweiten Flügel zu bilden, nämlich einen Außenflügel. Diese Ausführungsform ist besonders preiswert in der Herstellung, da besonders wenig Material für die Herstellung des Profils der Sicherungsschiene benötigt wird.

Bevorzugterweise besitzt die Sicherungsschiene noch ein oder mehrere Löcher, in welche Befestigungsmittel, wie Schrauben, Bolzen oder Ähnliches aufgenommen werden können. Diese Löcher können bevorzugt an den oberen Flügeln, den Innenflügeln oder auch den Außenflügeln vorgesehen sein. Besonders vorteilhaft ist es dabei, wenn die Löcher so ausgebildet sind, dass Befestigungsmittel derart in diese einbringbar sind, dass die Köpfe der Befestigungsmittel nicht über die Oberseite der Sicherungsschiene heraus stehen. In diesem Fall sind Fittings bequem und problemlos in den Ausnehmungen unter Zwischenschaltung des Hinterschnitts anbringbar, wie bei herkömmlichen Schienen auch.

In einer Ausführungsform der Löcher bei einer Schiene mit Innenflügel sind zwei in vertikalem Abstand zueinander angeordnete Löcher vorgesehen, wobei ein erstes oberes Loch im oberen Flügel und ein zweites unteres Loch im Innenflügel ausgebildet ist. Das im oberen Flügel angeordnete obere Loch weist dabei einen größeren Durchmesser auf als das im Innenflügel angeordnete untere Loch. Ein Befestigungsmittel, wie beispielsweise eine Schraube, kann dann einschließlich seines Kopfes durch das obere Loch hindurchgeführt werden, wobei der Schaft der Schraube dann durch das untere Loch geführt wird, um die Sicherungsschiene zu befestigen. Der Schraubenkopf oder der Kopf des Befestigungsmittels liegt dann auf dem Innenflügel bzw. auf dem unteren Loch auf, um so eine Verbindung zwischen der Sicherungsschiene und der darunterliegenden Fläche herzustellen.

Alternativ können auch die oberen Löcher im oberen Flügel als Senklöcher ausgebildet sein. Als Befestigungsmittel kann dann beispielsweise eine Senkkopfschraube dienen, wobei der Kopf dieser Senkkopfschraube im Senkloch zur Anlage kommt, so dass er nicht über den oberen Bereich der Sicherungsschiene heraussteht. Derartige Senklöcher können ebenfalls durch Stanzen des Materials, aus welchem die Sicherungsschiene im Umformprozess hergestellt wird, eingebracht werden; eine spanende Bearbeitung ist auch hier nicht erforderlich. Ist ein Innenflügel vorgesehen, so weist dieser dann ebenfalls ein unteres Loch auf, um den Schraubenschaft dort hindurch zu führen.

Besonders bevorzugt wird die Sicherungsschiene aus einem Stahl hergestellt, insbesondere aus einem höherfesten oder einem hochfesten Stahl. Derartige Stähle lassen sich in einem Umformprozess in das gewünschte Profil der Sicherungsschiene verarbeiten. Um die Sicherungsschiene vor Korrosion zu schützen, kann sie zusätzlich noch verzinkt werden.

Weitere Vorteile und Ausführungsformen der erfindungsgemäßen Sicherungsschiene ergeben sich aus der nachfolgenden Beschreibung, den Unteransprüchen sowie den Zeichnungen. In den Figuren ist die Sicherungsscheine in drei Ausführungsbeispielen dargestellt. Es zeigen:
- Fig. 1:: eine erfindungsgemäße Sicherungsschiene in einer ersten Ausführungsform, perspektivisch,
- Fug. 2:: einen Ausschnitt aus Fig. 1 entlang des Ausschnitts II, vergrößert,
- Fig. 3:: die Sicherungsschiene aus Fig. 1 und 2 im Profilquerschnitt,
- Fig. 4:: eine erfindungsgemäße Sicherungsschiene in einem zweiten Ausführungsbeispiel, perspektivisch,
- Fig. 5:: einen Ausschnitt aus Fig. 4 entlang des Ausschnitts V, vergrößert,
- Fig. 6:: die Sicherungsschiene aus Fig. 4 und 5 im Profilquerschnitt,
- Fig. 7:: eine erfindungsgemäße Sicherungsschiene in einem dritten Ausführungsbeispiel,
- Fig. 8:: einen Ausschnitt aus Fig. 7 entlang des Ausschnitts VIII, vergrößert,
- Fig. 9:: die Sicherungsschiene aus Fig. 7 und 8 im Profilquerschnitt.

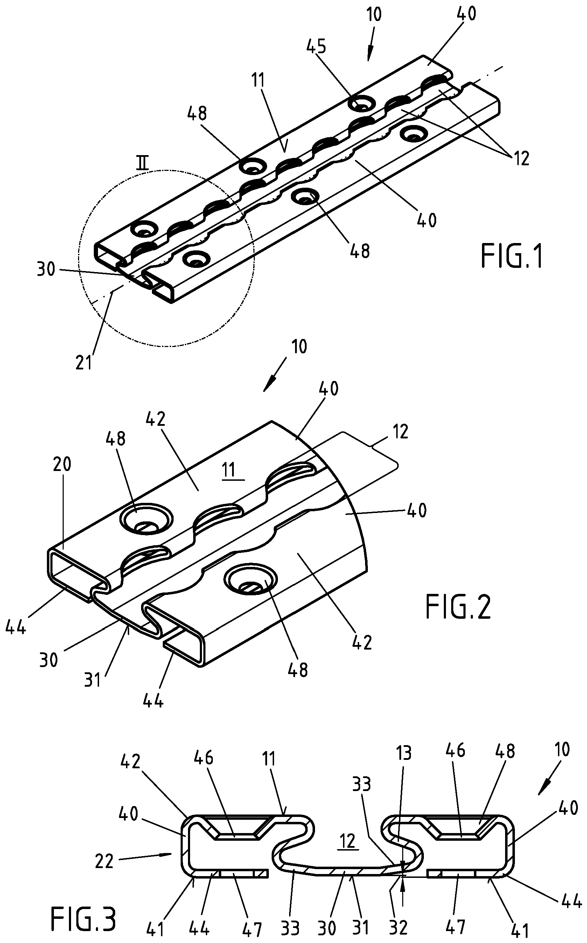

Die Fig. 1 bis 3 zeigen eine erste Ausführungsform der erfindungsgemäßen Sicherungsschiene 10. Diese besteht aus einem Profil 20, welches in Fig. 3 im Profilquerschnitt 22 dargestellt ist. Die Sicherungsschiene 10 weist dabei eine Vielzahl von nebeneinander angeordneten Ausnehmungen 12 auf, in welche unter Zwischenschaltung des Hinterschnitts 13, hier nicht weiter dargestellte Fittings einbringbar sind. Derartige Fittings sind aus dem Stand der Technik bekannt. Die Ausnehmungen 12 werden hier aus je zwei Ausstanzungen im Material der Sicherungsschiene 10 gebildet, die durch den Umformprozess einander gegenüber angeordnet sind und so in etwa die Form einer Ausnehmung 12 in einer herkömmlichen Sicherungsschiene 10 bilden.

Das Profil 20 ist symmetrisch zu seiner Längsachse 21 ausgebildet. Man erkennt, dass der Profilquerschnitt 22 einen Mittelbereich 30 sowie zwei Schenkel 40 aufweist. Der unterste Bereich 31 des Mittelbereiches 30 ist dabei ein wenig höher liegend angeordnet als der unterste Bereich 41 der Schenkel 40, so dass zwischen diesen beiden untersten Bereichen 31, 41 ein Spalt 32 besteht, bei dieser Ausführung in etwa 0,3mm breit. In diesen kann beispielsweise klebendes Material eingebracht werden, falls die Sicherungsschiene 10 an einer Fläche festgeklebt werden soll. Hierzu sind auch die beiden Flanken 33 nach oben abgewinkelt ausgebildet, damit eventuell zu viel aufgetragenes klebendes Material, welches dicker ist als der Spalt 32 zwischen dem untersten Bereich 31 des Mittelbereichs 30 und dem untersten Bereich 41 der Schenkel 40 nach dorthin ausweichen kann, ohne die Sicherungsschiene 10 zu verschmutzen.

Vom Mittelbereich 30 aus gesehen wird das Material der Sicherungsschiene 10 nach oben geführt und dann nach außen weggeklappt, um einen ersten Flügel, hier einen oberen Flügel 42, zu bilden und um dann wieder nach unten geführt zu werden und dort nach innen umgeschlagen zu werden, um einen zweiten Flügel zu bilden, den Innenflügel 44. Derartige Sicherungsschienen 10 sind sehr stabil, insbesondere auch gegen Biegekräfte. Insbesondere im Profilquerschnitt 22 aus Fig. 3 erkennt man, dass das Loch 45 aus zwei Löchern besteht, nämlich einem oberen Loch 46 im oberen Flügel 42 und einem unteren Loch 47 im Innenflügel 44. Diese Löcher 46, 47 sind übereinander angeordnet und vertikal zueinander beabstandet. Die oberen Löcher 46 sind in dieser Ausführungsform als Senklöcher 48 ausgestaltet. So können jetzt beispielsweise Senkkopfschrauben in die oberen Löcher 46 und unteren Löcher 47 eingebracht werden. Der Senkkopf der Schraube liegt dabei an dem als Senkloch 48 ausgebildeten oberen Loch 46 an und steht somit nicht über die Oberseite 11 der Sicherungsschiene 10 über. Der Schaft einer derartigen Senkkopfschraube wird dann durch das untere Loch 47 nach unten in die Fläche eingebracht, an der die Sicherungsschiene 10 befestigt wird. Derartige Senklöcher 48 sind bei dem vorliegenden Profil 20, welches als Umformprofil ausgebildet ist, im Umformprozess bzw. davor durch Stanzen einbringbar, so dass eine kostspielige und aufwendige spanende Bearbeitung entfällt.

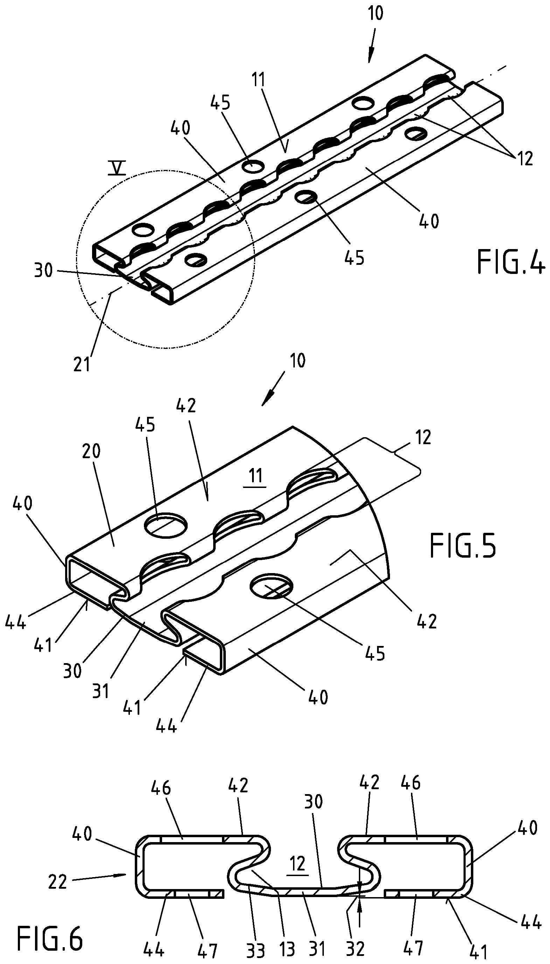

Die Fig. 4 bis 6 zeigen ein zweites Ausführungsbeispiel der erfindungsgemäßen Sicherungsschiene. Auch hier ist wieder ein Mittelbereich 30 vorgesehen, wobei das Material der Sicherungsschiene 10 von dort aus nach oben geführt wird und dann nach außen weg geklappt ist, um wieder einen ersten Flügel, nämlich einen oberen Flügel 42, zu bilden. Danach wird das Material nach unten geführt, um im unteren Bereich wieder nach innen umgeschlagen zu werden und dort einen zweiten Flügel, nämlich einen Innenflügel 44, zu bilden. Dies ist insbesondere aus dem Profilquerschnitt 22 aus Fig. 6 ersichtlich.

Auch hier besteht wieder ein Spalt 32 zwischen dem untersten Bereich 31 des Mittelbereichs 30 und dem untersten Bereich 41 der Schenkel 40. Auch die Flanken 33 des Mittelbereiches 30 sind wieder nach oben abgewinkelt. Hierdurch entstehen die bereits bekannten Vorteile beim Verkleben der Sicherungsschiene 10 an einer Oberfläche und der Verwendung von klebendem Material, wie Ein-Komponenten- oder Zwei-Komponenten-Klebern. Auch die Ausnehmungen 12 bestehen hier, wie bereits im ersten Ausführungsbeispiel dargestellt, aus ausgestanzten Öffnungen im Material des Profils 20. Diese Ausstanzungen können ebenfalls während des Umformprozesses oder davor erfolgen und sind wieder deutlich kostengünstiger realisierbar als eine spanende Bearbeitung wie bei herkömmlichen Schienen.

Insbesondere aus dem Profilquerschnitt 22 in Fig. 6 ist erkennbar, dass bei dieser Ausführungsform wieder zwei Löcher 45 vorgesehen sind, nämlich ein oberes Loch 46 im oberen Flügel 42 und ein unteres Loch 47 im Innenflügel 44, wobei diese beiden Löcher 46, 47 ebenfalls wieder vertikal voneinander beabstandet sind. Das obere Loch 46 weist hier jedoch einen deutlich größeren Durchmesser auf als das untere Loch 47. Eine herkömmliche Schraube, beispielsweise eine Zylinderkopfschraube, kann dann vollständig durch das obere Loch 46 hindurchgeführt werden und mit ihrem Schaft durch das untere Loch 47 greifen. Durch das obere Loch 46 kann dann ein Werkzeug, beispielsweise ein Schraubendreher, verwendet werden, um die Schraube festzuziehen. Der Kopf dieser Schraube liegt dann auf dem unteren Loch 47 bzw. auf dem Innenflügel 44 auf und dient so dazu, die Sicherungsschiene 10 an einer Fläche zu befestigen. Der Kopf der Schraube steht so nicht über die Oberseite 11 der Sicherungsschiene 10 hinaus, sondern ist vielmehr zwischen oberem Flügel 42 und dem Innenflügel 44 angeordnet. Ein Vorteil dieser Ausführungsform besteht darin, dass herkömmliche Schrauben, beispielsweise Zylinderkopfschauben, die einen preiswerten Massenartikel darstellen, Verwendung finden können.

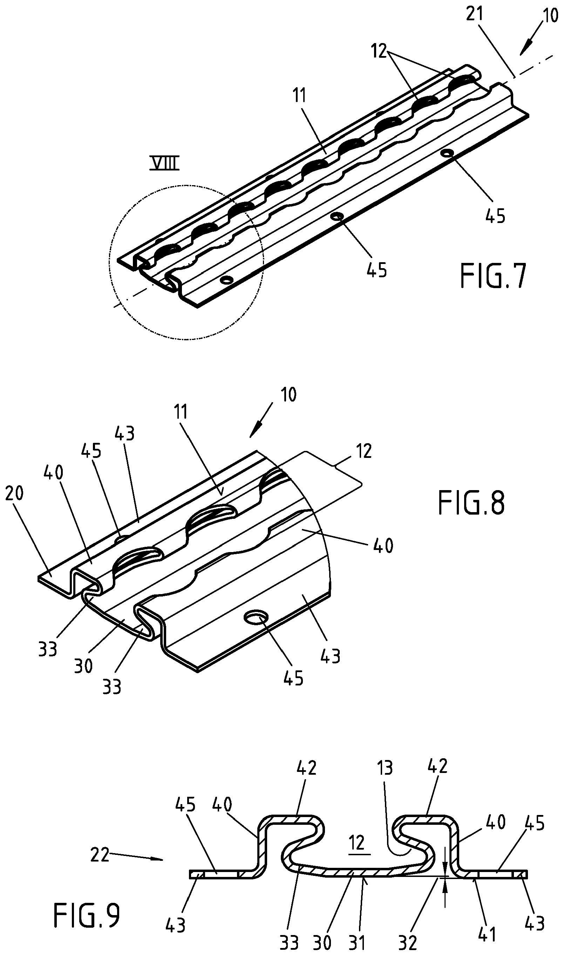

Ein drittes Ausführungsbeispiel zeigen die Fig. 7 bis 9. Im Gegensatz zu den beiden vorherigen Ausführungsbeispielen ist hier der obere Flügel 42 relativ schmal gehalten und weist auch keine Löcher 45 auf. Das Material des Profils 20 wird vom Mittelbereich 30 aus gesehen, nach oben geführt, dann nach außen weggeklappt, dann wieder nach unten geführt und im unteren Bereich weiter nach außen geklappt. Dort bildet es den Außenflügel 43. Hierdurch kann im Vergleich zu den beiden vorherigen Ausführungsbeispielen Material eingespart werden. Neben der auch bei dieser Ausführungsform möglichen Befestigung der Schiene durch eine Klebeverbindung, weswegen hier auch der Spalt 32 und die Flanken 33 vorgesehen sind, kann auch diese Sicherungsschiene 10 mittels der Löcher 45 unter Zuhilfenahme von Befestigungsmitteln, wie Schrauben, Bolzen oder Ähnliches an einer Fläche befestigt werden. Hier existieren jedoch lediglich einzelne Löcher 45 im Außenflügel 43. Auch diese Löcher 45 können wieder durch Stanzen in das Ausgangsmaterial der Sicherungsschiene 10, beispielsweise beim Umformprozess oder davor, eingebracht werden. Selbstverständlich kann auch bei einer derartigen Form einer Sicherungsschiene 10 eine Befestigung über Löcher 45 im oberen Flügel 42 erfolgen. Hier ist dann wieder eine Verwendung von Senklöchern 48 vorteilhaft.

Abschließend ist festzustellen, dass die hier dargestellten Ausführungsformen lediglich beispielshafte Verwirklichungen der Erfindung sind. Diese ist nicht darauf beschränkt. Es sind vielmehr Abwandlungen und Abänderungen möglich. Welche konkrete Form eine erfindungsgemäße Sicherungsschiene Verwendung findet, hängt vom jeweiligen Anwendungsfall ab.

### Bezugszeichenliste:

- 10: Sicherungsschiene
- 11: Oberseite von 10
- 12: Ausnehmung
- 13: Hinterschnitt
- 20: Profil
- 21: Längsache von 20
- 22: Profilquerschnitt
- 30: Mittelbereich
- 31: unterster Bereich von 30
- 32: Spalt
- 33: Flanke
- 40: Schenkel
- 41: unterster Bereich von 40
- 42: oberer Flügel
- 43: Außenflügel
- 44: Innenflügel
- 45: Loch
- 46: oberes Loch
- 47: unteres Loch
- 48: Senkloch

## Patentansprüche

1. Sicherungsschiene (10) zum Einbau in Fahrzeuge,
wobei die Sicherungsschiene (10) als wenigstens ein Profil (20) ausgebildet ist und in ihrer Oberseite (11) eine Vielzahl von Ausnehmungen (12) aufweist, die einen oder mehrere Hinterschnitte (13) besitzen
und wobei das Profil (20) aus einem umgeformten Blech besteht, wobei wenigstens ein Mittelbereich (30) und zwei seitlich davon angeordnete Schenkel (40) vorgesehen sind, wobei der Mittelbereich (30) symmetrisch zur Längsachse (21) der Sicherungsschiene (10) geformt ist, und
wobei im Profilquerschnitt (22) der Sicherungsschiene (10) betrachtet die Schenkel (40) vom Mittelbereich (30) aus gesehen nach oben und dann nach außen weggeklappt sind und einen ersten Flügel (oberer Flügel 42) bilden,
dann nach unten geführt sind und im unteren Bereich weiter nach außen geklappt sind und dort einen zweiten Flügel bilden (Außenflügel 43)
oder
dann nach unten geführt sind und im unteren Bereich wieder nach innen umgeschlagen sind und dort einen zweiten Flügel bilden (Innenflügel 44),
**dadurch gekennzeichnet, dass** die Ausnehmungen (12) aus je zwei Ausstanzungen im Material der Sicherungsschiene (10) gebildet werden, die durch den Umformprozess einander gegenüber angeordnet sind und so in etwa die Form einer Ausnehmung (12) in einer herkömmlichen Sicherungsschiene (10) bilden.

2. Sicherungsschiene (10) nach Anspruch 1, **dadurch gekennzeichnet, dass** das Profil als Rollformprofil ausgebildet ist.

3. Sicherungsschiene (10) nach einem der Ansprüche 1 oder 2 **dadurch gekennzeichnet, dass** zwischen dem untersten Bereich (31) des Mittelbereiches (30) und dem untersten Bereich (41) der Schenkel (40) ein Spalt (32) besteht, welcher der Aufnahme von klebendem Material dienen kann.

4. Sicherungsschiene (10) nach Anspruch 3, **dadurch gekennzeichnet, dass** der Mittelbereich (30) nach oben hin abgeknickte Flanken (33) aufweist, die klebendes Material aufnehmen können.

5. Sicherungsschiene (10) nach einem der Ansprüche 1 bis 4, **dadurch gekennzeichnet, dass** in den Schenkeln (40), insbesondere in den oberen Flügeln (42) und den Innenflügeln (44) oder in den Außenflügeln (43) ein oder mehrere Löcher (45) für die Aufnahme von Befestigungsmitteln wie Schrauben, Bolzen o.ä. vorgesehen sind.

6. Sicherungsschiene (10) nach Anspruch 5, **dadurch gekennzeichnet, dass** die Löcher (45) so ausgebildet sind, dass die Befestigungsmittel so in diese einbringbar sind, dass die Köpfe der Befestigungsmittel nicht über die Oberseite (11) der Sicherungsschiene (10) herausstehen.

7. Sicherungsschiene (10) nach einem der Ansprüche 4 bis 6, **dadurch gekennzeichnet, dass** die Löcher (45) im Schenkel (40) als zwei in vertikalem Abstand zueinander angeordnete Löcher (46, 47) im oberen Flügel (42) und im Innenflügel (44) ausgebildet sind, wobei das im oberen Flügel (42) angeordnete obere Loch (46) einen größeren Durchmesser aufweist als das im Innenflügel (44) angeordnete untere Loch (47).

8. Sicherungsschiene (10) nach einem der Ansprüche 1 bis 6, **dadurch gekennzeichnet, dass** die Löcher (45) im oberen Flügel (42) als Senklöcher (48) ausgebildet sind.

9. Sicherungsschiene (10) nach einem der Ansprüche 1 bis 8, **dadurch gekennzeichnet, dass** die Sicherungsschiene (10) aus einem Stahl, insbesondere aus einem höherfesten oder hochfesten Stahl, besteht.

10. Sicherungsschiene (10) nach einem der Ansprüche 1 bis 9, **dadurch gekennzeichnet, dass** die Sicherungsschiene (10) verzinkt ist.

## Claims

1. Safety rail (10) for installation in vehicles,
Wherein the safety rail (10) is designed as at least one profile (20), having in its upper side (11) a multiplicity of recesses (12) which have one or more undercuts (13), with the profile (20) consisting of a formed sheet metal,
wherein at least one centre section (30) and two arms (40) arranged laterally thereof are provided, with the centre section (30) being formed symmetrically with respect to the longitudinal axis (21) of the safety rail (10),
and wherein the arms (40) are folded upwards and then outwards and form a first wing (upper wing 42) in the profile cross-section (22) of the safety rail (10) when viewing from the centre section (30),
which are then are guided downward and are folded further outward in the lower section where they form a second wing (outer wing 43)
or are then are guided downward and turned inside again in the lower section where they form a second wing (inner wing 44),
**characterised in that** the recesses (12) are each formed from two punchings in the material of the safety rail (10), which are arranged opposite one another by the forming process and thus create approximately the shape of a recess (12) in a conventional safety rail (10).

2. Safety rail (10) according to claim 1, **characterised in that** the profile is designed as a roll-form profile.

3. Safety rail (10) according to one of claims 1 or 2, **characterised in that** there is a gap (32) between the lowermost section (31) of the centre section (30) and the lowermost section (41) of the arms (40) to which adhesive material can be applied.

4. Safety rail (10) according to claim 3, **characterised in that** the centre section (30) has upwardly bent flanks (33) to which adhesive material can be applied.

5. Safety rail (10) according to one of claims 1 to 4, **characterised in that** one or more holes (45) are provided in the arms (40), in particular in the upper wings (42) and the inner wings (44) or in the outer wings (43), that can be used to apply fastening means such as screws, bolts or the like.

6. A safety rail (10) according to claim 5, **characterised in that** the holes (45) are formed such that the fastening means can be applied to them such that the heads of the fastening means do not project beyond the upper side (11) of the safety rail (10).

7. Safety rail (10) according to one of claims 4 to 6, **characterised in that** the holes (45) in the arm (40) are designed as two holes (46, 47) arranged at a vertical distance from one another in the upper wing (42) and in the inner wing (44), with the upper hole (46) arranged in the upper wing (42) having a larger diameter than the lower hole (47) arranged in the inner wing (44).

8. Safety rail (10) according to one of claims 1 to 6, **characterised in that** the holes (45) in the upper wing (42) are shaped as countersunk holes (48).

9. Safety rail (10) according to one of the claims 1 to 8, **characterised in that** the safety rail (10) consists of steel, in particular of a higher-strength or high-strength steel.

10. Safety rail (10) according to one of claims 1 to 9, **characterised in that** the safety rail (10) is galvanised.

## Revendications

1. Rail de sécurité (10) à installer dans des véhicules,
sachant que le rail de sécurité (10) est configuré sous la forme d'au moins un profilé (20) et dont le dessus (11) présente un grand nombre d'évidements (12) dotés d'une ou plusieurs contre-dépouilles (13), et sachant que le profilé (20) se compose d'une tôle de forme modifiée,
sachant que sont prévues au moins une zone médiane (30) et deux branches (40) disposées sur les côtés de cette dernière, sachant que la zone médiane (30) est formée symétrique à l'axe longitudinal (21) du rail de sécurité (10),
et sachant que, considérées dans la section profilée (22) du rail de sécurité (10), les branches (40) observées depuis la zone médiane (30) sont repliées vers le haut puis vers l'extérieur et forment une première aile (aile supérieure 42),
qu'ensuite elles sont guidées vers le bas et que dans la zone du bas elles poursuivent par un pli vers l'extérieur et forment là-bas une deuxième aile (aile extérieure 43)
ou qu'ensuite elles sont guidées vers le bas et que dans la zone du bas elles sont rabattues à nouveau vers l'intérieur et forment à cet endroit une deuxième aile (aile intérieure (44),
**caractérisé en ce que** les évidements (12) sont formés chacun par deux poinçonnages dans le matériau du rail de sécurité (10), poinçonnages disposés l'un en face de l'autre en raison du process de modification de forme et qui donnent ainsi approximativement la forme d'un évidement (12) dans un rail de sécurité (10) conventionnel.

2. Rail de sécurité (10) selon la revendication 1, **caractérisé en ce que** le profilé est configuré en profilé laminé.

3. Rail de sécurité (10) selon l'une des revendications 1 ou 2, **caractérisé en ce qu'**entre la zone la plus basse (31) de la zone médiane (30) et la zone la plus basse (41) des branches (40) se trouve un interstice (32) pouvant servir à recevoir un matériau collant.

4. Rail de sécurité (10) selon la revendication 3, **caractérisé en ce que** la zone médiane (30) présente des flancs (33), repliés vers le haut, pouvant recevoir du matériau collant.

5. Rail de sécurité (10) selon l'une des revendications 1 à 4, **caractérisé en ce que** dans les branches (40), en particulier dans les ailes supérieures (42) et les ailes intérieures (44) ou dans les ailes extérieures (43) sont prévus un ou plusieurs trous (45) pour recevoir des moyens de fixation tels que des vis, boulons ou similaires.

6. Rail de sécurité (10) selon la revendication 5, **caractérisé en ce que** les trous (45) sont configurés de sorte que les moyens de fixation puissent être introduits dedans de manière que les têtes des moyens de fixation ne fassent pas saillie au-dessus du côté supérieur (11) du rail de sécurité (10).

7. Rail de sécurité (10) selon l'une des revendications 4 à 6, **caractérisé en ce que** les trous (45) dans la branche (40) sont configurés comme deux trous (46, 47) disposés verticalement distants l'un de l'autre dans l'aile supérieure (42) et l'aile intérieure (44), sachant que le trou supérieur (46) disposé dans l'aile supérieure (42) présente un plus grand diamètre que le trou inférieur (47) disposé dans l'aile intérieure (44).

8. Rail de sécurité (10) selon l'une des revendications 1 à 6, **caractérisé en ce que** les trous (45) dans l'aile supérieure (42) sont configurés en trous chambrés (48).

9. Rail de sécurité (10) selon l'une des revendications 1 à 8, **caractérisé en ce que** le rail de sécurité (10) est en acier, en particulier en acier de résistance accrue ou en acier hautement résistant.

10. Rail de sécurité (10) selon l'une des revendications 1 à 9, **caractérisé en ce que** le rail de sécurité (10) est zingué.
